# EUROPÄISCHE PATENTANMELDUNG

(11) **EP 0 826 326 A2**
(43) Veröffentlichungstag der Anmeldung: **04.03.1998**
(21) Anmeldenummer: 96120733.9
(22) Anmeldetag: 21.12.1996
(51) Int. Cl.: A47B 96/02

(54) **Regal für Lager- oder Kommissionierzwecke**

(30) Priorität: 24.08.1996 DE 29614743 U
(71) Anmelder: NEDCON MAGAZIJNINRICHTING B.V., NL-7000 AA Doetinchem (NL)
(72) Erfinder: Hollander, R.R., 7251 KC VORDEN (NL)
(74) Vertreter: Stenger, Watzke & Ring Patentanwälte

(57) **Zusammenfassung**

Die Erfindung betrifft ein Regal für Lager- oder Kommissionierzwecke mit vertikalen Stützen und mit die Stützen horizontal verbindenden Traversen, auf denen Profile mit daran ausgebildeten Auflage- und Führungsflächen für die vertikale Abstützung sowie seitliche Führung der aufliegenden Waren angeordnet sind. Um ein zur Aufnahme von Waren in Reihen geeignetes Regal für Lager- und Kommissionierzwecke zu schaffen, dessen Montage vor Ort in kürzerer Zeit durchführbar ist als dies bei bekannten Regalen der Fall ist, wird mit der Erfindung vorgeschlagen, daß jedes Profil (3) ein Fachboden mit mindestens einer Auflagefläche (7) ist, und daß über die Auflagefläche (7) hinausragende Führungsflächen (9) einstückig an dem Fachboden angeformt sind.

## Beschreibung

Die Erfindung betrifft ein Regal für Lager- oder Kommissionierzwecke mit vertikalen Stützen und mit die Stützen horizontal verbindenden Traversen, auf denen Profile mit daran ausgebildeten Auflage- und Führungsflächen für die vertikale Abstützung sowie seitliche Führung der aufliegenden Waren angeordnet sind.

Solche Regale eignen sich in erster Linie für Großregallager mit automatischer, rechnergesteuerter Ein- und Auslagerung von Stückgütern, z.B. von genormten Behältern oder Paletten. Das Regal ist hierzu in eine Vielzahl übereinander und nebeneinander angeordneter Fächer unterteilt, die sich in der Tiefe so weit erstrecken können, daß in jedem einzelnen Fach mehrere Stückgüter hintereinander gelagert werden können. Beim Ein- und Auslagern ist es erforderlich, die Stückgüter entlang des Faches zu verschieben, wozu eine langgestreckte, ebene Auflagefläche erforderlich ist, die zumindest die Längskanten des Stückgutes untergreift und ferner während des Verschiebens seitlich führt, um ein Verkanten des Stückgutes innerhalb des Faches zu verhindern.

Zur Bildung der einzelnen Fächer setzt sich ein bekanntes Regal für Lager-oder Kommissionierzwecke aus einem System vertikaler Stützen zusammen, an denen entsprechend den einzelnen Fachhöhen horizontale Traversen befestigt sind. Die Traversen erstrecken sich entlang der Vorder- und Rückseite des Regals und dienen - neben einer Verstrebung der vertikalen Stützen - dazu, Profile abzustützen, die sich rechtwinklig zu den Traversen durch die Tiefe des Regals hindurch erstrecken, und an denen jeweils eine Auflagefläche für die vertikale Abstützung sowie eine Führungsfläche für die seitliche Führung der Stückgüter angeordnet sind. Die Profile sind nach Art langgestreckter Winkel geformt, und werden jeweils paarweise auf den Traversen befestigt, so daß sich die aufliegenden Stückgüter mit ihren Längskanten auf den einander zugewandten Profilen abstützen.

Nachteilig an einem solchen Regalsystem ist der mit dessen Erstellung verbundene, sehr hohe Montageaufwand. Jedes Profil muß einzeln an der vorderen und an der hinteren Traverse befestigt werden, zudem ist der Abstand zwischen linkem und rechtem Profil, die gemeinsam ein Fach des Regals bilden, exakt einzuhalten, da nur dann ein verkantungsfreies Führen der Ware zwischen den Profilen sichergestellt ist.

Der Erfindung liegt die **Aufgabe** zugrunde, ein zur Aufnahme von Waren in Reihen geeignetes Regal für Lager- und Kommissionierzwecke zu schaffen, dessen Montage vor Ort in kürzerer Zeit durchführbar ist als dies bei bekannten Regalen der Fall ist.

Zur **Lösung** wird bei einem Regal der eingangs genannten Art vorgeschlagen, daß jedes Profil ein Fachboden mit mindestens einer Auflagefläche ist, und daß über die Auflagefläche hinausragende Führungsflächen einstückig an dem Fachboden angeformt sind.

Der entscheidende Vorteil dieses Regals besteht darin, daß an jedem einzelnen Fachboden sowohl die das Gewicht der Ware abstützende Auflagefläche als auch Führungsflächen bereits angeformt sind. Es ist daher nicht erforderlich, diese Elemente einzeln mit der Grundkonstruktion des Regals zu verschrauben oder anderweitig zu verbinden, vielmehr reicht es aus, den Fachboden einfach in geeignete Aufnahmen, die z. B. direkt an den Traversen angeformt sein können, einzusetzen. Es ist auch nicht erforderlich, den Abstand der Führungsflächen zueinander einzustellen. Da die zwei an dem Fachboden angeformten Führungsflächen einstückig mit der Auflagefläche verbunden sind, kann die Wahrung des richtigen Abstandes bereits bei der Herstellung des einzelnen Fachbodens berücksichtigt werden, so daß dieser dann vor Ort nur noch in die aus den Stützen und Traversen zusammengesetzte Grundkonstruktion des Regals eingesetzt werden muß. Insgesamt wird auf diese Weise eine erhebliche Einsparung an Montagezeit ermöglicht, so daß sich ein erfindungsgemäßes Regal an Ort und Stelle und aus vorgefertigten Teilen in kürzester Zeit erstellen läßt.

Mit einer bevorzugten Ausgestaltung wird vorgeschlagen, daß sich die über die Auflagefläche hinausragenden Führungsflächen entlang beider Seitenränder des Profils und damit des Fachbodens erstrecken.

Ferner wird vorgeschlagen, daß die Seitenränder des Profils die Querschnittsgestalt eines zur Profilmitte hin offenen "C" aufweisen, und daß die Führungsfläche an dem oberen Abschnitt des "C" ausgebildet ist, wohingegen sich an dem unteren Abschnitt des "C" eine in einer Ebene unterhalb der Auflagefläche angeordnete Stützfläche befindet, mit der sich das Profil auf der Traverse abstützt. Durch diese Gestaltung des Profilquerschnittes wird eine hohe Biegefestigkeit des Profils in Längsrichtung erreicht, so daß sich auch langgestreckte Fachböden realisieren lassen, deren Durchbiegung auch bei Stückgütern hohen Gewichtes in relativ engen Grenzen bleibt.

Zur weiteren Steigerung der Biegefestigkeit des einzelnen Profils wird vorgeschlagen, daß der obere Abschnitt des "C" trapezförmig geformt ist mit einer die Führungsfläche bildenden Schräge, einem daran anschließenden horizontalen Profilabschnitt sowie einem vertikalen Profilabschnitt, der in Verlängerung den horizontalen Profilabschnitt mit der Stützfläche verbindet.

Um auch die Durchbiegung quer zur Längsrichtung des Profils gering zu halten, wird mit einer weiteren Ausgestaltung zumindest eine weitere Stützfläche vorgeschlagen, welche sich zwischen zwei Auflageflächen des Profils befindet. Eine praktische Ausführungsvariante hierzu ist gekennzeichnet durch mindestens zwei in einer gemeinsamen Ebene angeordnete Auflageflächen sowie einen zwischen den Auflageflächen angeordneten und diesen gegenüber abgesenkten Kanal, dessen Boden zugleich die weitere Stützfläche bildet.

Um das Regal im Hinblick auf etwaige brandschutztechnische Anforderungen zu optimieren, können die weiteren Stützflächen mit regelmäßig verteilten Öffnungen versehen sein. Dadurch ist im Brandfall ein Abströmen des Löschwassers über die im Boden des Kanals gebildeten Öffnungen möglich, so daß sich die als Lasttragflächen dienenden Auflageflächen selbst weitgehend eben gestalten lassen, wodurch sich wiederum die Waren mit relativ geringem Reibwiderstand entlang der Auflageflächen verschieben lassen. Zur Verbesserung der Durchlässigkeit des Fachbodens wird ferner vorgeschlagen, daß die Auflagefläche zweigeteilt mit einer dazwischen angeordneten Einsenkung geformt ist, und daß die Einsenkung entlang ihres Bodens mit Öffnungen versehen ist. Insbesondere kann die Einsenkung jede Auflagefläche in zwei gleich große Flächen unterteilen. Die Herstellung der Öffnung kann z.B. durch Ausstanzen der entsprechenden Flächen mittels eines Stanzwerkzeuges erfolgen. Dabei ergeben sich scharfkantige Grate, die, würden sie sich im Bereich der Auflageflächen befinden, zu einer Erhöhung des Reibwiderstandes bei der Bewegung entlang des Profils führen müßten. Zur Vermeidung dieses Nachteils wird daher vorgeschlagen, daß die Auflageflächen selbst keine Öffnungen aufweisen.

Wegen der hohen Biegefestigkeit des Profils kann dieses relativ lang sein und daher auch zwei hintereinander angeordnete Fächer gemeinsam durchlaufen. Um in diesem Fall eine Unterteilung in ein von der Vorderseite zugängliches, und ein von der Rückseite zugängliches Fach durchzuführen, ist eine Weiterbildung des erfindungsgemäßen Regals gekennzeichnet durch einen über die Ebene der Auflagefläche hinausragenden Wegbegrenzer, der die Gesamtlänge der Auflagefläche in zwei unabhängig voneinander mit Waren bestückbare Längsabschnitte unterteilt.

Um das Einsetzen der einzelnen Profile in die horizontalen Traversen zu vereinfachen, wird schließlich vorgeschlagen, daß die Traverse auf ihrer dem Profil zugewandten Seite mit einer Stufe versehen ist, auf der das vordere Ende des Profils mit seinen Stützflächen aufliegt, und daß die Auflagefläche in etwa mit der Oberseite der Traverse abschließt, wohingegen die Führungsflächen über die Oberseite der Traverse hinausragen.

Weitere Einzelheiten und Vorteile der Erfindung werden nachfolgend anhand von Ausführungsbeispielen erläutert, die auf der Zeichnung dargestellt sind. Im einzelnen zeigen:
- Fig. 1: in einer Frontansicht drei nebeneinander in einer Ebene angeordnete Fächer eines Regals für Lager- oder Kommissionierzwecke, wobei zwei dieser Fächer mit Waren versehen sind;
- Fig. 2: in einer perspektivischen, teilweise geschnittenen Darstellung die Verbindung zwischen einer horizontalen Traverse des Regals und einem auf dieser Traverse aufliegenden Fachboden in Gestalt eines langgestreckten Profils, wobei mit I-I jene Schnittebene bezeichnet ist, die in Fig. 1 wiedergegeben ist;
- Fig. 3: eine Schnittdarstellung entsprechend der Schnittebene III-III der Fig. 2;
- Fig. 4: in einer perspektivischen Stirnansicht eines der in dem Regal verwendeten Fachböden mit einer Darstellung der von der Traverse auf den Fachboden übertragenen Reaktionskräfte;
- Fig. 5: in einer perspektivischen Darstellung eine weitere Variante des Fachbodens mit einem Wegbegrenzer;
- Fig. 6: in einer perspektivischen Darstellung eine weitere Variante des Fachbodens mit einer Mehrzahl an Öffnungen und
- Fig. 7: in einer perspektivischen Stirnansicht ein weiteres Ausführungsbeispiel eines Fachbodens, wobei die Führungsflächen in der Mitte des Fachbodens angeordnet sind.

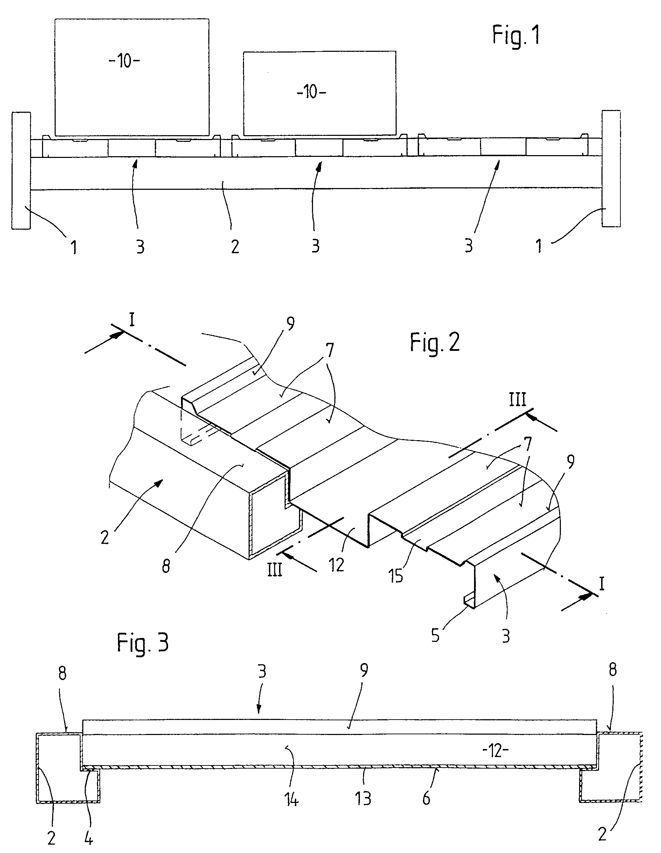

In Fig. 1 ist lediglich ein kleiner Ausschnitt aus einem ausgedehnten Regal für Lager- oder Kommissionierzwecke dargestellt. Die Grundstruktur des Regals besteht aus vertikalen Stützen 1 und horizontalen Traversen 2, welche die Stützen 1 miteinander verbinden und der Gesamtkonstruktion nach Art eines Fachwerks Stabilität verleihen. Die Traversen 2 sind vorzugsweise mit den Stützen 1 verschraubt. Auf den Traversen 2 liegen Fachböden in Gestalt eines langgestreckten Profils 3 auf. Beim Ausführungsbeispiel gemäß Fig. 1 ist die Länge der Traverse 2 derart bemessen, daß darauf Platz für insgesamt drei parallel ausgerichtete Fachböden bzw. Profile 3 ist. Die Profile 3 können unmittelbar aneinanderstoßen oder, wie dies in Fig. 1 dargestellt ist, einen geringen Abstand zueinander aufweisen, wobei zu diesem Zweck nicht dargestellte Abstandshalter in die Traversen 2 eingesetzt werden können. Zur Aufnahme der Profile 3 sind mindestens zwei Traversen 2 erforderlich, von denen sich eine Traverse an der Vorderseite, und die andere Traverse an der Rückseite des Regals befindet.

In Fig. 2 ist dargestellt, daß die Traverse 2 aus einem Hohlprofil bestehen kann, welches auf seiner dem Profil 3 zugewandten Seite mit einer Stufe 4 versehen ist. Auf dieser Stufe 4 liegt das Profil 3 mit seinem jeweiligen Ende auf, so daß sich das auf die richtige Länge zugeschnittene Profil 3 von oben her mit seinen beiden Enden zwischen die Traversen 2 einlegen läßt. Eine zusätzliche Sicherung des Profils 3, etwa durch Schrauben oder andere Befestigungselemente, ist nicht erforderlich. Zur Ableitung der Gewichtskraft auf die Traverse 2 ist das Profil 3 mit Stützflächen 6, 7 versehen, die sich unmittelbar auf der Stufe 4 der Traverse 2 abstützen. Zwei Stützflächen 5 erstrecken sich entlang der Seitenränder des Profils 3, eine weitere, in derselben Horizontalebene angeordnete Stützfläche 6 befindet sich in Profilmitte. Zur Aufnahme der zu lagernden Stückgüter oder sonstigen Waren ist das Profil 3 mit mehreren horizontalen Auflageflächen 7 versehen. Die Höhenabmessung der Stufe 4 der Traverse 2 ist derart, daß die Auflagefläche 7 des Profils 3 in etwa mit der Oberseite 8 der Traverse 2 abschließt, wenn das Profil 3 mit seinen Stützflächen 5, 6 auf der Stufe 4 aufliegt.

Fig. 2 läßt ferner erkennen, daß das Profil 3 entlang seiner beiden Seitenränder mit Führungsflächen 9 versehen ist, die über die Ebene der Auflageflächen 7 hinausragen, und die daher auch über die Oberseite 8 der Traverse 2 hinausragen. Die Führungsflächen 9 übernehmen die seitliche Führung der auf den Auflageflächen 7 des Profils 3 aufliegenden Waren 10 während des vorzugsweise automatischen Verschiebens entlang des Fachbodens. Da die Oberseite 8 der Traverse 2 in etwa mit den Auflageflächen 7 abschließt, ergibt sich in diesen Bereichen ein stufenloser Übergang, so daß die Waren 10 ausschließlich durch Ziehen oder Verschieben entlang des Fachbodens bewegt werden können, ohne an den Traversen 2 hängen zu bleiben.

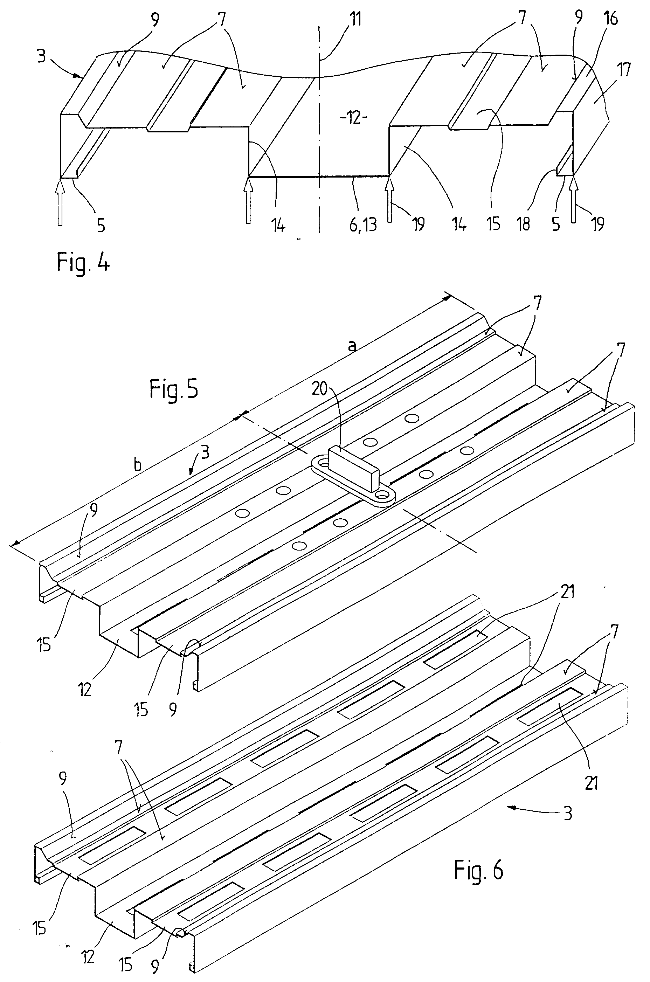

Anhand der Fig. 4 werden nunmehr alle Einzelheiten der Querschnittsgestaltung des als Fachboden dienenden Profils 3 erläutert. Das Profil 3 besteht aus einem einzigen, durch mehrfaches Abkanten geformten Blech von 0,5 bis höchstens 2 mm Dicke. Das Blech ist entsprechend der Symmetrieebene 11 symmetrisch geformt und setzt sich aus Auflageflächen 7 zusammen, die beidseits eines Kanals 12 angeordnet sind, dessen Boden 13 die Funktion der weiteren Stützfläche 6 wahrnimmt. Der aus dem Boden 13 sowie zwei Seitenwänden 14 bestehende Kanal 12 ist aus Gründen höchstmöglicher Stabilität rechteckig gestaltet. Jede der beidseits des Kanals 12 angeordneten Auflageflächen 7 ist durch eine Einsenkung 15 nochmals in zwei getrennte Auflageflächen unterteilt. Die Höhe der Einsenkung 15 ist weit geringer als der vertikale Abstand zwischen den Auflageflächen 7 und den Stützflächen 5, 6. Die Einsenkungen 15 verleihen den Auflageflächen 7 eine insgesamt noch einmal verbesserte Biegefestigkeit in Längsrichtung des Profils.

Außen schließen sich an die dortigen Auflageflächen 7 die nach Art von Schrägen gestalteten Führungsflächen 9 an. Die Führungsflächen 9 wiederum gehen in horizontale Profilabschnitte 16 über, an die sich über eine 90°-Abkantung vertikale Profilabschnitte 17 anschließen. Diese vertikalen Profilabschnitte 17 verbinden daher die horizontalen Profilabschnitte 16 mit der jeweiligen äußeren Stützfläche 5, die sich wiederum in derselben horizontalen Ebene befindet, wie die zentral angeordnete weitere Stützfläche 6. Die Stützflächen 5 wiederum sind an ihrem inneren Rand mit 90°-Abwinklungen 18 versehen, die zugleich den äußeren Rand des Blechstreifens bilden, bevor dieser zu dem auf der Zeichnung dargestellten Profil 3 verformt wird.

Die Randbereiche des Profils 3 lassen sich in erster Näherung als in Gestalt eines zur Profilmitte hin offenen "C" geformt beschreiben. Der obere Abschnitt dieses "C" ist trapezförmig geformt, und setzt sich aus der schräg angeordneten Führungsfläche 9 sowie dem horizontalen Profilabschnitt 16 zusammen. Die Verbindung zwischen oberem und unterem Abschnitt des "C" erfolgt dann über den vertikalen Profilabschnitt 17. Der untere Teil des vertikalen Profilabschnitts 17 wiederum bildet zusammen mit der außenliegenden Stützfläche 5 und der 90°-Abwinklung 18 den unteren Abschnitt des so gebildeten "C".

Das beschriebene Profil 3 zeichnet sich zunächst durch eine besonders hohe Biegefestigkeit aus, wofür in erster Linie die aus rechteckigen Kastenprofilen zusammengesetzte Querschnittsstruktur verantwortlich ist. Zudem zeichnet sich das Profil durch eine besonders günstige Lastverteilung aus. Die bei Belastung entstehenden Reaktionskräfte, die von der Traverse aufzunehmen sind, tragen in der Fig. 4 die Bezugszeichen 19. Diese Reaktionskräfte 19 wirken in jenen vertikalen Ebenen, in denen sich die beiden äußeren vertikalen Profilabschnitte 17 sowie die Seitenwände 14 des Kanals 12 befinden. Zur Erzielung einer über die Breite des Profils besonders gleichmäßigen Krafteinleitung sollte die Breite des Kanals 12 zwischen 20 und 30 % der Gesamtbreite des Profils 3 betragen.

In Fig. 5 ist dargestellt, daß der Fachboden mit einem über die Ebene der Auflageflächen 7 hinausragenden Wegbegrenzer 20 versehen werden kann, der die Gesamtlänge der Auflagefläche in zwei unabhängig voneinander mit Waren bestückbare Längsabschnitte a und b unterteilt.

Gemäß Fig. 6 kann das Profil 3 mit Öffnungen 21 im Boden 13 des Kanals 12 sowie in den Einsenkungen 15 versehen sein, über die in einem Brandfall Löschwasser abfließen kann. Die Öffnungen 21 werden durch Stanzen des Blechs vor dessen Biegung hergestellt. Die dabei zwangsläufig entstehenden Grate sind unschädlich, da die Auflageflächen 7 selbst und auch die Führungsflächen 9 keine derartigen Öffnungen aufweisen.

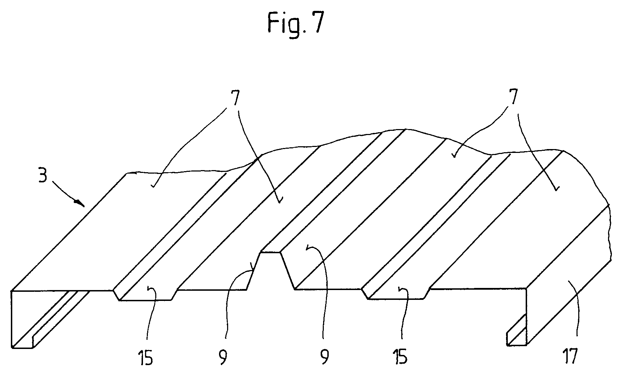

In Fig. 7 ist ein weiteres Ausführungsbeispiel dargestellt. Hierbei befinden sich die Führungsflächen 9 nicht entlang der Seitenränder des Fachbodens 3, sondern entlang dessen Mitte. Links und rechts hiervon sind die Auflageflächen 7 angeordnet, die wiederum mit Einsenkungen 15 versehen sind. Auch der Fachboden gemäß Fig. 7 ist einstückig ausgebildet. Im Gegensatz zu den in den Figuren 1 bis 6 dargestellten Fachböden dienen nicht sämtliche Auflageflächen 7 der Abstützung ein- und derselben Warenreihe, sondern der Waren zweier benachbarter Warenreihen. Erst zwei der in Fig. 7 dargestellten Fachböden 3 ergeben daher zusammen ein Fach, in welches sich eine Warenreihe einschieben läßt. Vorzugsweise stoßen auch bei der Ausführungsform gemäß Fig. 7 die einzelnen Fachböden 3 unmittelbar aneinander.

### Bezugszeichenliste

- 1: Stütze
- 2: Traverse
- 3: Profil, Fachboden
- 4: Stufe
- 5: Stützfläche
- 6: weitere Stützfläche
- 7: Auflagefläche
- 8: Oberseite
- 9: Führungsfläche
- 10: Ware
- 11: Symmetrieebene
- 12: Kanal
- 13: Boden
- 14: Seitenwand
- 15: Einsenkung
- 16: horizontaler Profilabschnitt
- 17: vertikaler Profilabschnitt
- 18: 90°-Abwinklung
- 19: Reaktionskraft
- 20: Wegbegrenzer
- 21: Öffnung
- a: Längsabschnitt
- b: Längsabschnitt

## Patentansprüche

1. Regal für Lager- oder Kommissionierzwecke mit vertikalen Stützen (1) und mit die Stützen (1) horizontal verbindenden Traversen (2), auf denen Profile (3) mit daran ausgebildeten Auflage- (7) und Führungsflächen (9) für die vertikale Abstützung sowie seitliche Führung der aufliegenden Waren (10) angeordnet sind,
**dadurch gekennzeichnet,**
daß jedes Profil (3) ein Fachboden mit mindestens einer Auflagefläche (7) ist, und daß über die Auflagefläche (7) hinausragende Führungsflächen (9) einstückig an dem Fachboden angeformt sind.

2. Regal nach Anspruch 1, dadurch gekennzeichnet, daß sich die über die Auflagefläche (7) hinausragenden Führungsflächen (9) entlang beider Seitenränder des Profils (3) erstrecken.

3. Regal nach Anspruch 2, dadurch gekennzeichnet, daß die Seitenränder des Profils (3) die Querschnittsgestalt eines zur Profilmitte hin offenen "C" aufweisen, und daß die Führungsfläche (9) an dem oberen Abschnitt des "C" ausgebildet ist, wohingegen sich an dem unteren Abschnitt des "C" eine in einer Ebene unterhalb der Auflagefläche (7) angeordnete Stützfläche (5) befindet, mit der sich das Profil (3) auf der Traverse (2) abstützt.

4. Regal nach Anspruch 3, dadurch gekennzeichnet, daß der obere Abschnitt des "C" trapezförmig geformt ist mit einer die Führungsfläche (9) bildenden Schräge, einem daran anschließenden horizontalen Profilabschnitt (16) sowie einem vertikalen Profilabschnitt (17), der in Verlängerung den horizontalen Profilabschnitt (16) mit der Stützfläche (5) verbindet.

5. Regal nach einem der Ansprüche 3 oder 4, gekennzeichnet durch zumindest eine weitere Stützfläche (6), welche sich zwischen zwei Auflageflächen (7) des Profils (3) befindet.

6. Regal nach Anspruch 5, gekennzeichnet durch mindestens zwei in einer gemeinsamen Ebene angeordnete Auflageflächen (7) sowie einen zwischen den Auflageflächen (7) angeordneten und diesen gegenüber abgesenkten Kanal (12), an dessen Boden (13) sich die weitere Stützfläche (6) befindet.

7. Regal nach Anspruch 6, dadurch gekennzeichnet, daß die weitere Stützfläche (6) mit regelmäßig verteilten Öffnungen (21) versehen ist.

8. Regal nach Anspruch 7, dadurch gekennzeichnet, daß die Auflagefläche (7) zweigeteilt mit einer dazwischen angeordneten Einsenkung (15) geformt ist, und daß die Einsenkung (15) entlang ihres Bodens mit Öffnungen (21) versehen ist.

9. Regal nach Anspruch 7 oder Anspruch 8, dadurch gekennzeichnet, daß die Auflagefläche selbst keine Öffnungen aufweist.

10. Regal nach einem der vorangehenden Ansprüche, gekennzeichnet durch einen über die Ebene der Auflagefläche (7) hinausragenden Wegbegrenzer (20), der die Gesamtlänge der Auflagefläche (7) in zwei unabhängig voneinander mit Waren (10) bestückbare Längsabschnitte (a, b) unterteilt.

11. Regal nach einem der vorangehenden Ansprüche, dadurch gekennzeichnet, daß die Traverse (2) auf ihrer dem Profil (3) zugewandten Seite mit einer Stufe (4) versehen ist, auf der das vordere Ende des Profils (3) mit seinen Stützflächen (5, 6) aufliegt, und daß die Auflagefläche (7) in etwa mit der Oberseite (8) der Traverse (2) abschließt, wohingegen die Führungsflächen (9) über die Oberseite (8) der Traverse (2) hinausragen.

12. Regal nach Anspruch 1, dadurch gekennzeichnet, daß sich die beiden über die Auflagefläche (7) hinausragenden Führungsflächen (9) entlang der Mitte des Profils (3) erstrecken, und sich links und rechts davon jeweils Auflageflächen (7) befinden, die benachbarten Warenreihen zugeordnet sind.
